# EUROPEAN PATENT APPLICATION

(11) **EP 4 137 862 A1**
(43) Date of publication of application: **22.02.2023**
(21) Application number: 21275114.3
(22) Date of filing: 16.08.2021
(51) Int. Cl.: G02B 19/00, G02B 27/01, G02B 27/30, G02B 5/04

(54) **COLLIMATING DEVICE**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A prismatic collimating device to collimate image bearing light is disclosed. The prismatic collimating device comprises a first prism and a second prism arranged to receive and collimate a light beam. The first prism comprises an output surface adjacent to an input surface of the second prism. The first prism and second prism are arranged such that the light beam undergoes total internal reflection and refraction at both the output surface of the first prism and the input surface of the second prism. Each of the first prism and second prism comprising at least three optically powered surfaces.

## Description

### BACKGROUND

Waveguides may be used in displays to expand image bearing light for display to a user.

### BRIEF DESCRIPTION OF DRAWINGS

Figure 1 illustrates a conventional waveguide and collimation optic.
Figure 2 illustrates an alternative optical arrangement in accordance with some examples.
Figures 3a and 3b illustrate the difference between an optimised and non-optimised layout.
Figure 4a illustrates a side-on view of a first waveguide 430 according to some examples.
Figure 4b illustrates a top-down view of a first waveguide 430 according to some examples.
Figure 5a illustrates a top-down view of the second waveguide 530 in accordance with some examples.
Figure 5b illustrates a side-on view the second waveguide 530 in accordance with some examples.
Figure 6 illustrates an expanded view of patchwork waveguide apparatus 600.
Figure 7 illustrates a vertical expansion waveguide comprising output coupling regions which overlap.
Figures 8a and 8b illustrates offset output coupling regions in accordance with some examples.
Figures 9 and 10 illustrate a head mounted display in accordance with some examples.
Figure 11 illustrates a head mounted display comprising an internal coating region.
Figure 12 illustrates a typical lens train and expansion waveguide.
Figure 13 illustrates a folded prismatic collimating device according to some examples.
Figure 14 illustrates the folded prismatic collimating device shown with an illustration of the surfaces having optical power/freeform surfaces.
Figure 15 illustrates the folded prismatic collimating device with light from three point sources on an image plane.
Figures 16a and 16b illustrate the folded prismatic collimating device in combination with a 1D waveguide.
Figures 17a and 17b illustrate the folded prismatic collimating device 1300 in combination with a 2D waveguide.

### DETAILED DESCRIPTION

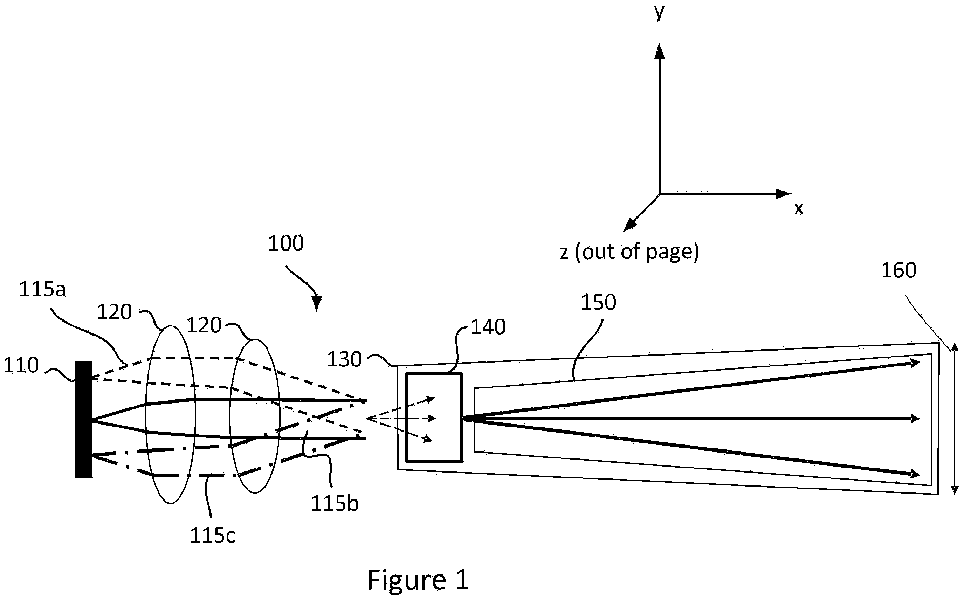

Figure 1 illustrates a typical optical arrangement 100. The optical arrangement 100 is configured to collimate light, and expand image bearing light in a single dimension. The optical arrangement comprises a light source 110, collimation system 120 and a waveguide 130. The waveguide 130 comprises an input coupling region 140 and an output coupling region 150. The output coupling region 150 expands and outputs the image bearing light beam from the waveguide 150. Expansion may also be provided by other features of the waveguide 130, and the properties of the waveguide 130 itself may also expand the beam.

The light source 110 comprises at least one point source arranged to output a plurality of beams 115a-115c forming an image bearing light beam. The image bearing light beam has a field of view (FOV), the field of view may be separated into a vertical FOV and horizontal FOV. Vertical and horizontal refers to the dimensions of the image when displayed to the user.

The light source 110 and collimation system 120 are arranged to collimate the plurality of beams and to form a pupil of the image bearing light beam on the input coupling region 140 of the waveguide 130. The pupil formed on the input coupling region 140 means that waist points of the image bearing light beam is common in the x axis and y axis of the waveguide 130. As shown in Figure 1 the x axis is parallel to the direction of propagation of the light in the waveguide 130.

An impact of the common pupil being formed on the input coupling region 140 is that the image bearing light beam diverges along the length of the waveguide 130. The amount of divergence is proportional to the field of view (FOV) of the image bearing light beam and the length of the waveguide. Therefore the minimum height 160 (along the y axis) of the waveguide 130 increases as the image bearing light beam propagates through the waveguide 130.

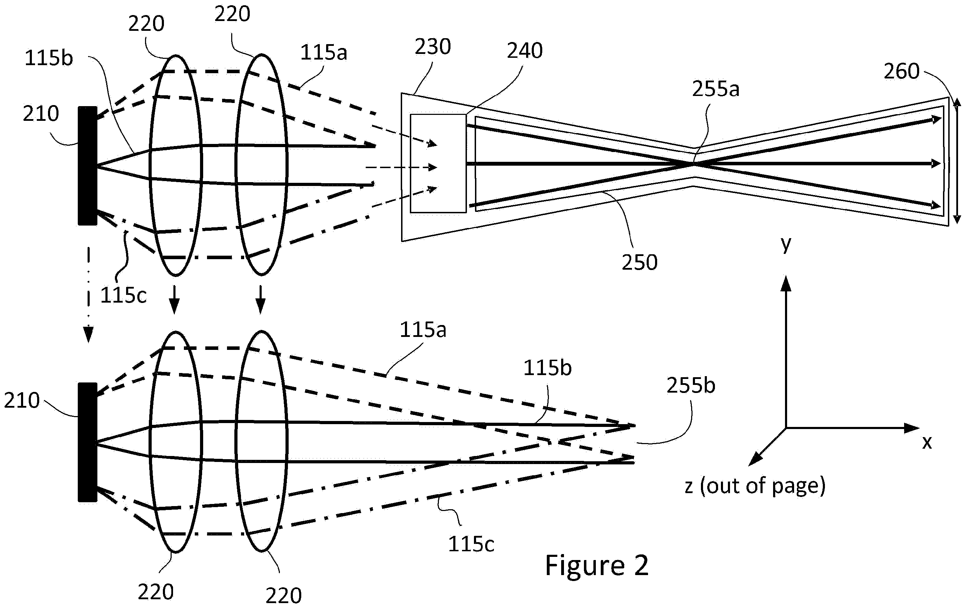

Figure 2 illustrates an example of an alternative optical arrangement 200 according to some examples. The alternative optical arrangement 200 is configured to collimate light, and expand image bearing light in a single dimension. The alternative optical arrangement 200 comprises a light source 210, collimation system 220 and an expansion waveguide 230. The expansion waveguide 230 comprises an input coupling region 240 and an output coupling region 250. The output coupling region 250 expands and outputs the image bearing light beam from the waveguide 230. The properties of the waveguide 230 itself may also expand the beam.

The light source 210 comprises at least one point source arranged to output a plurality of beams 115a-115c forming an image bearing light beam. The image bearing light beam has a field of view (FOV), the field of view may be separated into a vertical FOV and horizontal FOV. Vertical and horizontal refers to the dimensions of the image when displayed to the user.

The alternative optical arrangement 200 differs from the optical arrangement 100 at least in that the light source 210 and the collimation system 220 are arranged to form the image bearing light beam such that the vertical FOV angles are directed to a non-common pupil position past the input coupling region 250, such that a first waist point of the image bearing light beam along the x axis is formed at a first point 255a of the waveguide 230 and the second waist point along the z axis is formed substantially at the input coupling region. The image bearing light beam is also illustrated in Figure 2 to show the light beam without the waveguide 230 present.

By making use of a non-common pupil or, in other words positionally displacing the field angles in this way the light in the waveguide 230 initially converges in the expansion waveguide 230 and has a crossover point at the first point 255a. After the first point 255a the light diverges. Therefore the minimum height 260 of the expansion waveguide 230 is reduced compared to a waveguide of the same length and FOV of the type shown in Figure 1. The non-common pupil also allows the waveguide to have unnecessary material removed, forming a substantially bow-tie or hourglass shape. Removing unnecessary material allows the mass to be reduced compared to similar devices as illustrated by Figure 1. This may be particularly relevant for head worn devices where reduced mass may be favourable.

The collimation system 220 is shown in Figure 2 as a linear optical system. An impact of arranging the non-common pupil is that the vertical size of the optical system may be increased. To mitigate this a folded optic could be used, such as a prismatic collimator.

In some examples the input coupling region 240 and the output coupling region 250 may comprise gratings. In some examples the input coupling region 240 and the output coupling region 250 may comprise gratings operating substantially in reflection mode or substantially in transmissive mode. The gratings may be embedded or surface gratings. The gratings may comprise microstructures that are intended to be reflective rather than diffractive. The microstructures may operate through reflection or transmission. The microstructures may be sized such that they are not easily visible to a user.

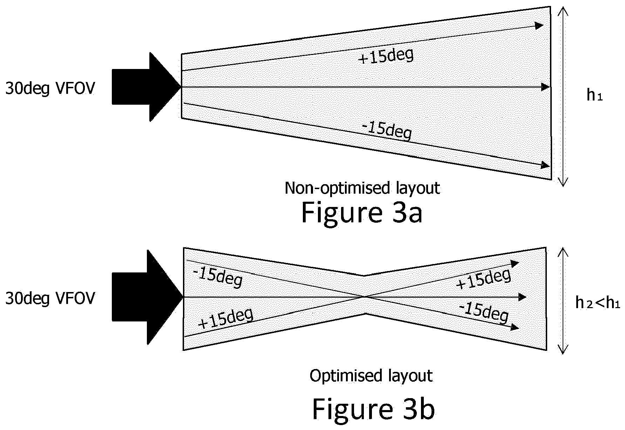

An illustration of an optimised waveguide compared to a non-optimised waveguide is shown in Figures 3a and 3b. In Figure 3a the vertical FOV is ± 15° and the height of the non-optimised waveguide is h₁. In Figure 3b the vertical FOV is also ± 15°, however the height of the waveguide is h₂ where h₂ < h₁. Other ranges of FOV are possible. The lengths of the waveguides are equal.

The heights (h₁ and h₂) may be calculated by simple trigonometry. In a worked example, the length of the waveguides may be 100 mm. In Figure 3a h₁ = 2 x tan (15°) x 100 mm = 53.59 mm. In Figure 3b h₂ = 2 x tan (15°) x 50 mm = 26.79 mm.

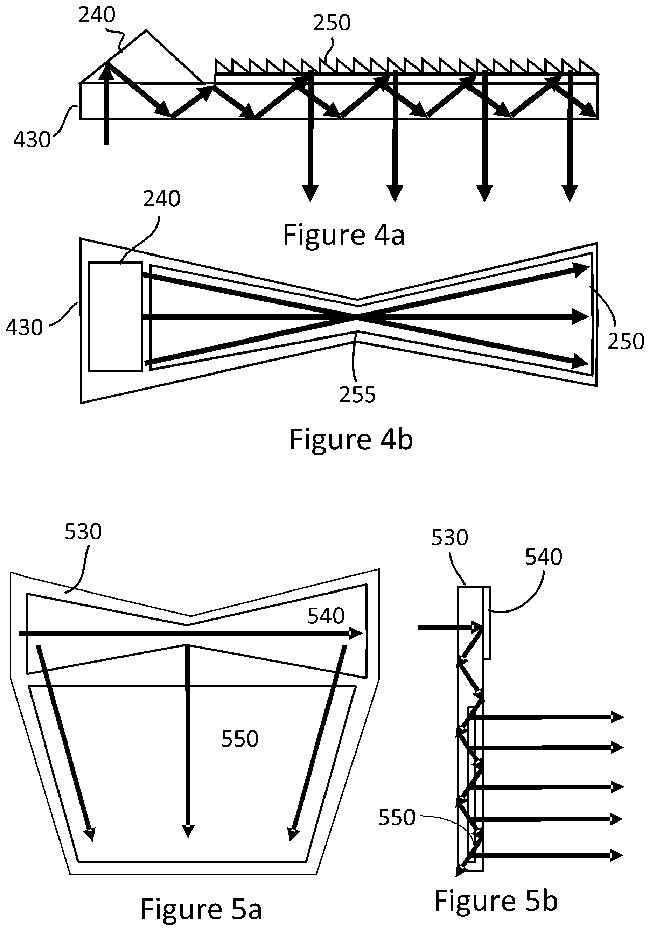

Figure 2 illustrates a modified waveguide for expanding the image in a horizontal image dimension. However, a waveguide system may comprise at least two waveguides, a first waveguide for expanding the image in the horizontal dimension and a second waveguide for expanding the image in a vertical dimension. The first waveguide may be substantially similar to that described with relation to Figure 2. The second waveguide may have an input region comprising substantially the same shape as the output region of the first waveguide. For example, the input region of the second waveguide may be substantially bow-tie or hourglass shaped. This is illustrated in Figures 4a-b and Figures 5a-b.

Figure 4a illustrates a side-on view of a first waveguide 430 according to some examples. The first waveguide 430 is substantially similar to the expansion waveguide 230 described in relation to Figure 2. The first waveguide 430 comprises an input coupling region 240, which in Figure 4a is shown as a prismatic input coupling region. Image bearing light is coupled into the first waveguide 430 and propagates under total internal reflection. Output coupling region 250, illustrated in Figure 4a as a microstructure similar to a saw tooth grating, expands the pupil in the horizontal image dimension and outputs the image bearing light. It is not intended to limit the structure to a saw tooth structure as illustrated in Figure 4a and other microstructure arrangements may be suitable.

Figure 4b illustrates a top-down view of the first waveguide 430. Similar to waveguide 230, the first waveguide 430 is configured to receive a non-common pupil such that the first waveguide 430 has a substantially bow tie shape, and the image bearing light beam crosses over at midpoint 255.

The direction of propagation of the image bearing light beam is illustrated in Figures 4a and 4b. The light bearing image beam enters the first waveguide 430 and interacts with the input coupling region 240. The image bearing light beam then propagates along the waveguide undergoing total internal reflection.

The image bearing light beam interacts with the output coupling region 250 such that part of the image bearing light beam is output, and part continues to propagate along the first waveguide 430. This results in expansion of the image bearing light beam in the horizontal image dimension.

Figure 4b illustrates how the vertical field angles of the image bearing light are input with a non-common exit pupil or are positionally displaced, such that the image bearing light beam has a waist point 255 that is located past the input coupling region. In Figure 4b it is illustrated at being substantially at a midpoint of the waveguide, however the waist point 255 may be located at any location along the first waveguide 430, by adjusting the positional displacement of angles at the input coupling region.

Figure 4b also illustrates that unwanted material has been removed from the first waveguide 430. This may both reduce the mass of the waveguide and also reduce the size of the waveguide compared to a waveguide where the light is input with a common exit pupil.

Figure 5a illustrates the second waveguide 530 in accordance with some examples. Second waveguide 530 is configured to receive image bearing light from the first waveguide 430 and expand the image bearing light in the vertical dimension. The input coupling region 540 of second waveguide 530 is shaped such that it's outline is substantially similar to the outline of the output coupling region 250 of first waveguide 430.

The output coupling region 550 of the second waveguide 530 is substantially transmssive, to allow a user to see through the second waveguide 530 to see the external scene. In some examples the output coupling region 540 of the second waveguide 530 may comprise a grating that operates in a substantially diffractive mode. The diffractive grating may be embedded in the waveguide. The gratings used for the input structure and the output structure of the second waveguide 530 may have matched pitches to counteract any unwanted distortion caused by the gratings.

As illustrated by Figures 5a and 5b, the image bearing light beam enters the second waveguide 530 and interacts with the input coupling region 530 and propagates along the second waveguide 530 by total internal reflection.

The image bearing light beam interacts with the output coupling region 550 to both output the image bearing light beam and expand the image bearing light beam in the vertical image dimension.

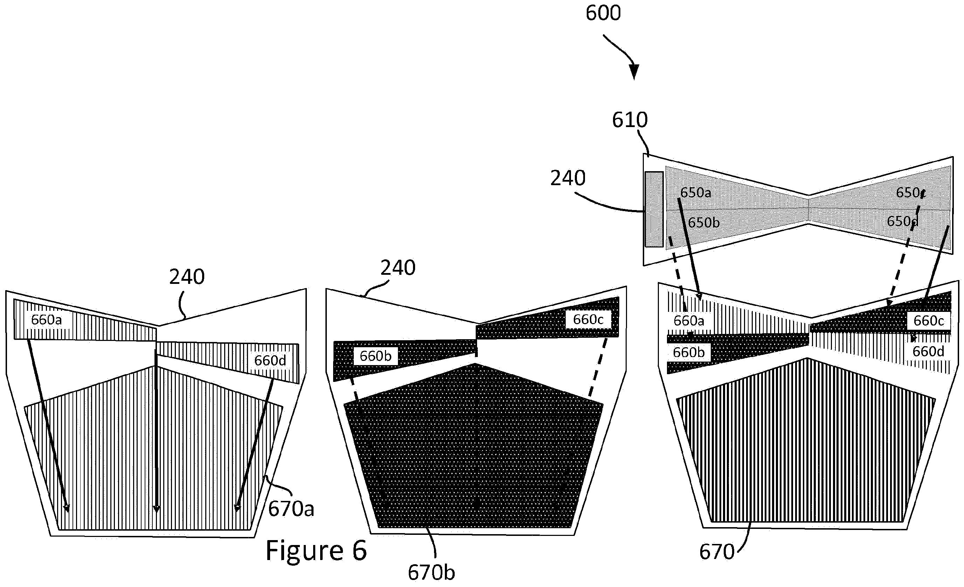

In some examples a waveguide may comprise more than one vertical expansion waveguide arranged in a patchwork pattern. This is illustrated in Figure 6. Figure 6 illustrates an expanded view of patchwork waveguide apparatus 600.

Patchwork waveguide apparatus 600 comprises a patchwork horizontal expansion waveguide 610, comprising an input region 240 and first through fourth output coupling regions. The patchwork horizontal expansion waveguide 610 is substantially similar to the expansion waveguide 230, however the patchwork horizontal expansion waveguide 610 is configured to direct light to different input coupling regions of a stacked vertical expansion waveguide 670 dependent upon an optical property of the light. The stacked vertical expansion waveguide 670 comprises a first output region 670a and a second output region 670b substantially overlaid on top of each other. The first output region 670a and the second output region may be separated by an airgap, or alternatively may be separated by a bonding layer. The bodning layer is configured to enable TIR to continue. The separation of the stack may be approximately 0.5 mm, however the exact separation may depend upon the application and wavelength of light used.

In some examples, patchwork horizontal expansion waveguide 610 comprises a first through fourth output coupling regions 650a-d. First output coupling region 650a is configured to direct light towards first input coupling region 660a. Second output coupling region 650b is configured to direct light towards second input coupling region 660b. Third output coupling region 650c is configured to direct light towards third input coupling region 660c. Fourth output coupling region 650d is configured to direct light towards fourth input coupling region 660d.

Light input into first input coupling region 660a and fourth input coupling region 660d is directed towards first output region 670a. Light input into second input coupling region 660b and third input coupling region 660c is directed towards second output region 670b.

Each of the input coupling regions 660a-d receive a specific and/or discrete portion of light. In some examples the light may be directed based on FOV. In some examples the FOV of the collimation optic to input light into the patchwork waveguide apparatus 600 may be 40° in the vertical axis, and therefore the FOV about the centreline may be ± 20°. This is because the field angle ray path may be arranged to be symmetrical around the centreline. As the field angle path is symmetrical, rays with an angle of -20° to 0° may be directed to the first vertical expansion waveguide and rays with an angle of 0° to +20° may be directed to the second vertical expansion device. As the output areas are arranged such that they have substantially the same area, and are substantially aligned the FOV is presented as a single reconciled FOV to the user with no splitting. This allows a clean split between adjacent vertical expanders, which may be individually optimised for efficiency and bandwidth over the input angles.

Additionally because a relatively low angular bandwidth is required in this example a wide spectral range could be catered for, therefore a wide FOV full colour image can be provided in a smaller form factor. Finally the reduction In size of the gratings allows the impact of restrike at the gratings to be reduced. Restrike occurs when light interacting with the in-coupling region does not clear the region after a first bounce under TIR and re-interacts with in-coupling region causing a loss in efficiency. Restrike is more prevalent in larger area gratings, specifically when used with thin waveguide substrates and could significantly reduce the efficiency of a system. The patchwork grating arrangement therefore has a benefit over other arrangements as the smaller grating areas present a lower chance of restrike.

This arrangement could be increased to include further vertical expanders with a suitable patchwork arrangement (i.e. more segmented patches orientated about the centreline). For example in some examples the patchwork waveguide apparatus 600 may comprise three or more vertical expansion waveguides.

This arrangement can be further optimised to ensure the vertical field angles which are split between vertical expanders are directed toward a common eye box, this results in the light being spread over a smaller area and therefore can increase effective efficiency of the pupil expansion operation. To achieve the increase in effective efficiency the output gratings are displaced in the Y-Axis, and optimised to output light over a smaller positional area, or eyebox. This will also increase the overall transmission of the device as the user has to look through fewer overlaidgrating patches, which can commonly reduce the transmission of real world imagery. This will also reduce spurious diffraction of light which can occur when light from the waveguide furthest from the eyebox interacts with/transmits through the grating of the waveguide nearest to the eye which can causes further losses of system efficiency.

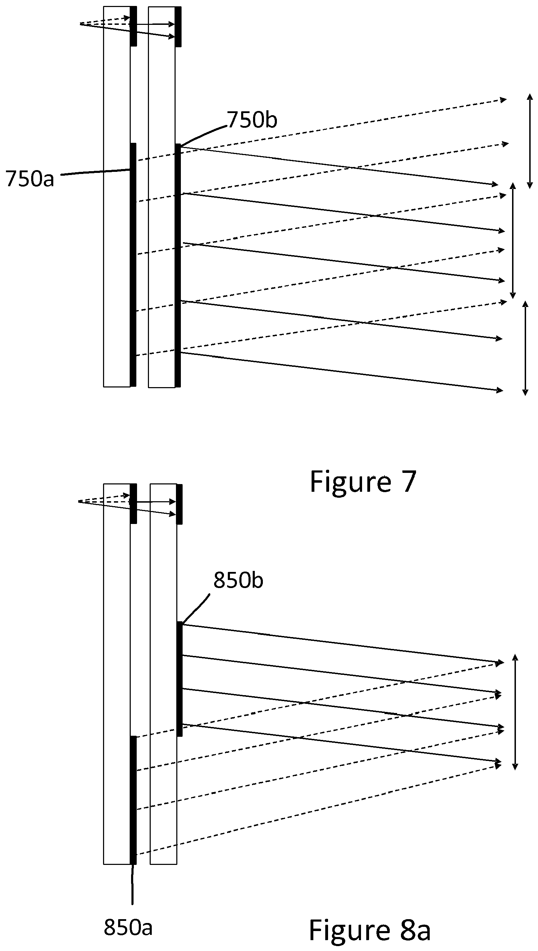

This is illustrated in Figures 7 and 8a-b. Figure 7 illustrates a vertical expansion waveguide comprising output coupling regions 750a-b which overlap, such that light output from output coupling region 750a passes through output coupling region 750b. As described this results in overexpansion of the eyebox, and therefore wasted light and a reduction in effective efficiency of the device.

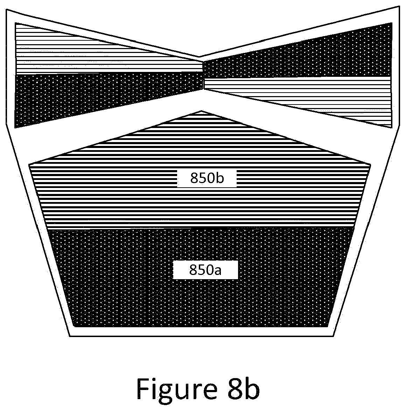

Figures 8a and 8b illustrates offset output coupling regions 850a-b. As the offset output coupling regions 850a-b are offset the majority of light emitted from offset output coupling region 850a does not pass through offset output coupling regions 850b. in some examples the offset output coupling regions 850a-b may be arranged such that substantially no light from offset output coupling region 850a passes through offset output coupling region 850b.

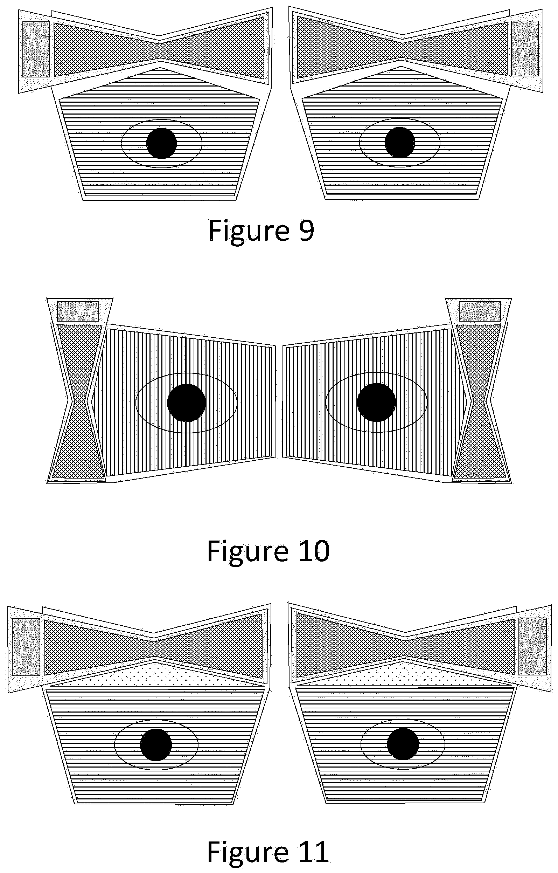

The above describes horizontal and vertical expansion waveguides. However, this is merely convention, and the waveguide apparatus may be used to expand the image in any pair of orthogonal image dimensions. Multiple waveguide apparatus may be combined in a binocular arrangement, as illustrated in Figures 9 and 10.

In Figure 9 a pair of expansion waveguides is provided. The input light is initially expanded by a horizontal expansion waveguide and then input into a pair of vertical expansion waveguides. The expansion waveguides may be substantially similar to the devices as described with relation to Figures 2-8b.

Figure 10 is similar to Figure 9, however the first expansion the light interacts with is a vertical expansion waveguide, rather than a horizontal expansion waveguide.

Figure 11 illustrates a head mounted display comprising an intermediate region comprising an internal coating layer. The intermediate layer may allow a degree of beam splitting of light undergoing TIR between the layers, which helps to reduce pupil banding and therefore may lead to a smoother and more continuous image.

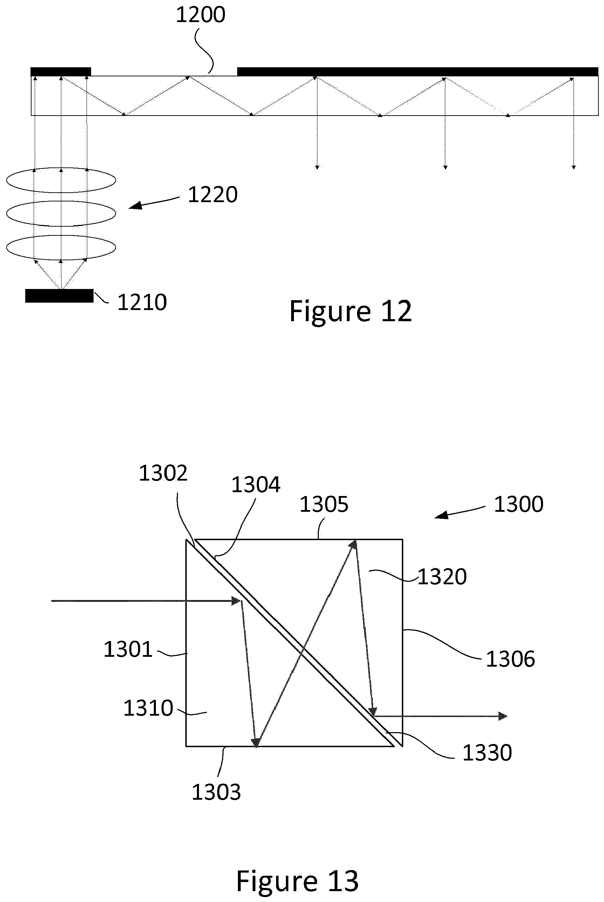

Waveguide expansion elements are typically configured to receive collimated light. Light may be collimated using a lens arrangement as shown in Figure 12. A waveguide 1200 is configured to receive light from a light source 1210. The light is collimated by a free-space lens train 1220. Free space lens trains are typically bulky, and therefore in applications where a small size device is required a smaller and less bulky collimating device is preferable. Furthermore, the lenses must be accurately aligned and, which increases in complexity with the increase in number of lenses.

Figure 13 illustrates a folded prismatic collimating device 1300 according to some examples. The folded prismatic collimating device 1300 comprises a first prism 1310 and a second prism 1320. The first prism 1310 and the second prism are separated by an air gap 1330. For simplicity the first prism 1310 and the second prism 1320 are shown without any surface forms or curvature. However each surface of the first prism 1310 and the second prism 1320 are shaped to have optical power.

Light interacts with a first surface 1301 of the first prism 1310 and enters the first prism 1310. The first surface 1301 of the first prism 1310 causes the light to undergo refraction towards a second surface 1302 of the first prism 1310. Due to the presence of the air gap 1330 and the angle of incidence of the light, the light that is refracted by the first surface 1301 undergoes total internal reflection (TIR) at the second surface 1302, and is reflected towards a third surface 1303. The third surface 1303 is configured to reflect light received towards the second surface 1302. Due to the angle of incidence, light received from the third surface 1303 at the second surface 1302 is output from the first prism 1310 towards the second prism 1320.

Light output from the first prism 1310 is received by the second prism 1320 at a fourth surface 1304. The light received by the fourth surface 1304 undergoes refraction, and is directed towards a fifth surface 1305. The fifth surface reflects light back towards the fourth surface 1304. Light received at the fourth surface 1304, due to the angle of incidence and the air gap 1330, undergoes total internal reflection, and is directed towards the sixth surface 1306. Light received at the sixth surface 1306 from the fourth surface is output from the second prism 1320.

Due to the optical power of each surface, light may enter the folded prismatic device 1300 and exit collimated. The collimated light may then be directed toward a waveguide expansion element.

In some examples, to aid reflection the third surface 1303 and the fifth surface may be coated with a reflective mirror coating. In some examples at least one of the first surface 1301, the second surface 1302, the fourth surface 1304, and the sixth surface may be coated with an anti-reflection coating. In some examples all of the first surface 1301, the second surface 1302, the fourth surface 1304, and the sixth surface may be coated with an anti-reflection coating.

The first prism 1310 and the second prism 1320 are arranged to receive and collimate a light beam from a light source. As can be seen from Figure 12, the output surface of the first prism, (i.e. the second surface 1302) is adjacent to the input surface of the second prism (i.e the fourth surface 1304).

The first prism and second prism are arranged such that the light beam undergoes total internal reflection and refraction at both the output surface of the first prism 1310 and the input surface of the second prism 1320. Each of the first prism 1310 and second prism 1320 comprise at least three optically powered surfaces. The optical power is chosen based on the desired properties of the output light and the input light properties in a similar way to the optical power of lenses may be chosen. The surface forms, orientation and material of the prisms may be optimised to achieve the desired output parameters.

Each of the first prism 1310 and the second prism 1320 comprise a surface where the light interacts with the surface twice, and at least two surfaces where the light only interacts once.

In order to allow a small air gap 1330, the surface forms of the second surface 1303 and the fourth surface 1304 may be the same, or substantially the same. However, light that interacts with second surface 1302 the fourth surface 1304 may interact such that one is effectively concave, and the other effectively convex. The surface forms being the same allows the air gap 1330 to be kept constant, and also may reduce the complexity of aligning the prisms.

In some examples the air gap 1330 may be less than 1 mm. In some examples the air gap 1330 may be within a range of 0.25 mm to 0.5 mm. The lower range is based on the tolerance of maintaining the gap. A lower bound for the air gap 1330 may be of order of 100s of nm, as below 100s of nm issues like interference or evanescent coupling may occur. The size of the air gap may also be dictated by the overall size of the device where a smaller device requires a smaller air gap.

In some examples the first prism 1310 and the second prism 1320 may have a substantially triangular cross-section.

Figure 13 shows the folded prismatic collimating device 1300 receiving a single ray of light from a single source. However, this is for ease of viewing the Figure. It is to be understood that the folded prismatic collimating device may be configured to receive light from any number of light sources. In some examples the light sources may comprise point light sources. The drawings illustrate the light source as comprising three point light sources however this is merely for ease of viewing. The light source comprises a plurality of sources,.

In some examples the folded prismatic collimating device 1300 may output a light beam having a common exit pupil in both a vertical and horizontal axis. In some examples the folded prismatic collimating device 1300 may output a light beam having an uncommon exit pupil in a vertical and horizontal axis, such that the light beam that is output has a different waist point for the vertical and horizontal axis.

In some examples the first prism 1310 and the second prism 1320 may be bonded together, for example by an adhesive. The air gap 1330 may be replaced by a bonding layer or another low refractive index coating.

In some examples, the prisms may comprise alignment features, to reduce the complexity of aligning the prisms.

In some examples, the at least one of the first surface 1301, second surface 1302, third surface 1303, fourth surface 1304, fifth surface 1305 and sixth surface 1306 may have a surface form substantially defined by at least one of: a spherical surface definition, an aspheric surface definition, a biconical surface definition, or a high order polynomial definition. In this context high may mean an order of ten or more.

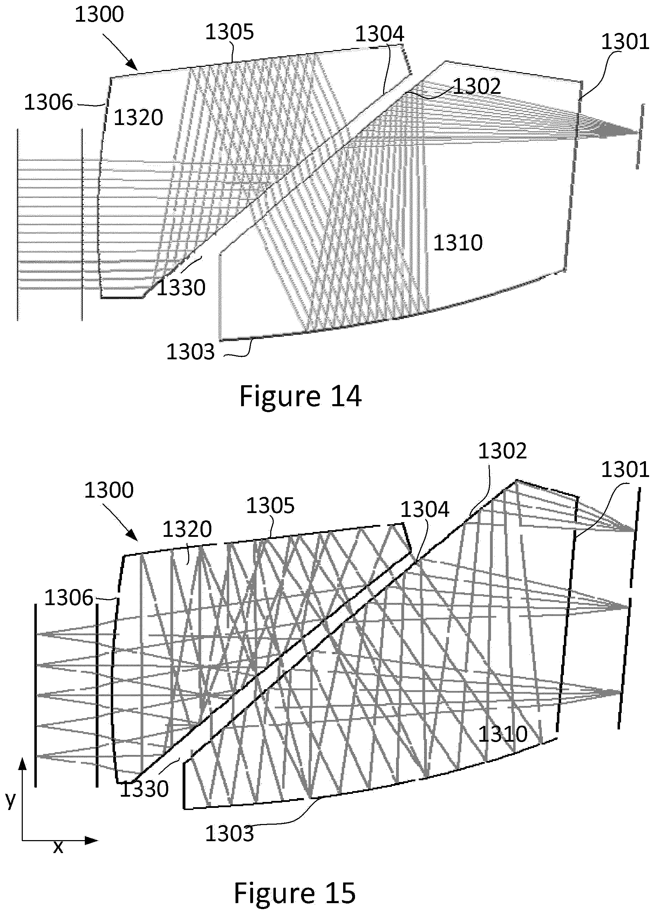

Figure 14 illustrates the folded prismatic collimating device 1300, however unlike Figure 13 it is shown with the surfaces having optical power/freeform surfaces and also shows more ray traces. Light entering the folded prismatic collimating device 1300 is shown from a single point source for ease of viewing, however as stated above any number of light sources may be used.

Figure 15 illustrates the folded prismatic collimating device 1300 with light from three point sources on an image plane 1510. Unlike Figure 14, Figure 15 shows the exit pupil comprising a FOV in the y axis of the folded prismatic collimating device 1300. The FOV in the y axis is the main factor in the height of the folded prismatic collimating device 1300. Similarly, a FOV in the x axis of the image is the main factor in the width of the folded prismatic collimating device 1300.

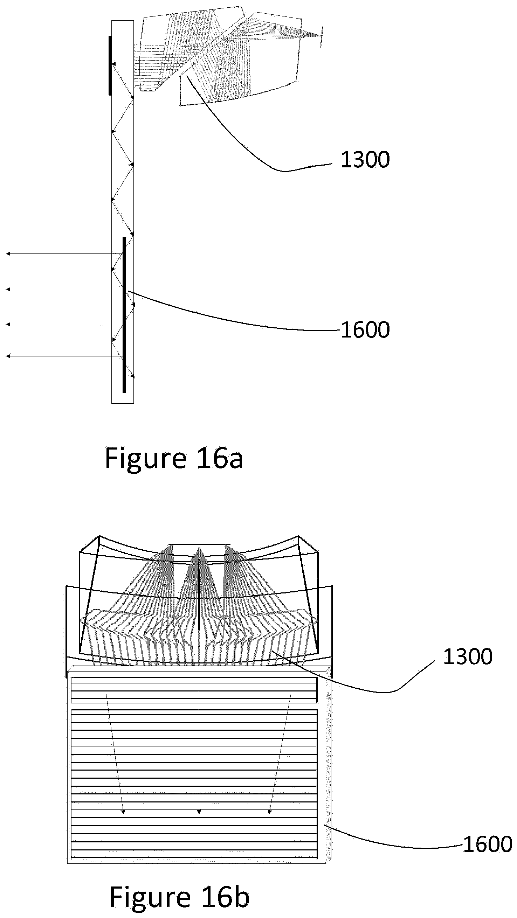

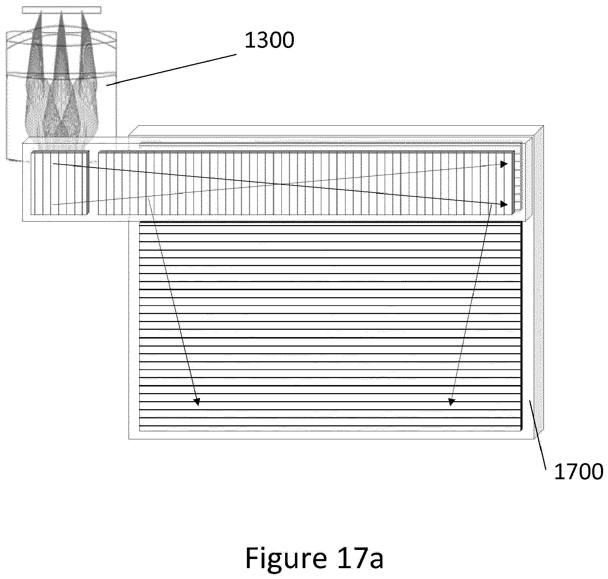

The folded prismatic collimating device 1300 may be used in both 1D and 2D waveguide systems. A 1D waveguide system provides expansion in one dimension, and a 2D waveguide provides expansion in two dimensions. 1D and 2D waveguide systems require different types of arrangements of field angles and exit pupils. This is illustrated by Figures 16a-b and Figures 17a-b.

Figures 16a and 16b illustrate the folded prismatic collimating device 1300 in combination with a 1D waveguide 1600. In the case of the 1D system, the exit pupil generated by the folded prismatic collimating device 1300 isuch that the field angles output by the device are positionally displaced in one axis whilst having a common position in the orthogonal axis. As shown in Figures 16a and 16b, the field angles do not share a common pupil positon in the x axis of at the input to the waveguide, and instead are spread along in the input to the waveguide. This is done to facilitate the exit pupil of the field angles forming at the design eye point, once the light has been ejected from the waveguide.

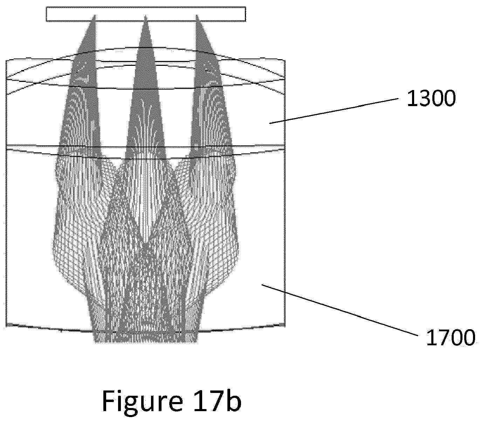

Figures 17a and 17b illustrate the folded prismatic collimating device 1300 in combination with a 2D waveguide 1700. The 2D waveguide provides expansion of the image in two axes. In the 2D system the exit pupil generated by the folded prismatic collimating device 1300 is designed to have a common position in the x and y axes. As shown in Figures 17a and 17b, the field angles form a common pupil at the input to the waveguide. This is done as the waveguide 1700 expands the pupil in both the x and the y axis. The folded prismatic collimating device 1300 is smaller in width than the folded prismatic collimating device 1300 of Figure 16a-b.

A high order polynomial may be a polynomial with at least 10 terms.

## Claims

1. A prismatic collimating device to collimate image bearing light, the prismatic collimating device comprising:
a first prism and a second prism;
the first prism comprising a first surface, a second surface and a third surface,
the first surface configured to receive and refract image bearing light, from an image source, towards the second surface,
the second surface configured to reflect light by total internal reflection, the light received from the first surface, towards the third surface, and refract light received, from the third surface, towards the second prism.,
the third surface configured to reflect light received, from the second surface, towards the second surface; and
the second prism comprising a fourth surface, a fifth surface and a sixth surface
the fourth surface configured to receive and refract light, received from the third surface, towards the fifth surface, and reflect light by total internal reflection, the light received from the fifth surface, towards the sixth surface,
the fifth surface configured to receive light, from the fourth surface, and reflect towards the fourth surface,
the sixth surface configured to receive and refract light, providing a collimated output, received from the fourth surface;
wherein the first surface, second surface, third surface, fourth surface, fifth surface and sixth surface are optically powered, and an air gap is provided between the second surface and the fourth surface.

2. The prismatic collimating device according to claim 1, wherein the first prism and the second prism have a substantially triangular cross-section.

3. The prismatic collimating device according to claim 3, wherein each set of the plurality of sets of point sources comprise a different colour.

4. The prismatic collimating device according to any preceding claim, wherein an exit pupil of collimated output comprises common coordinates in a horizontal axis and a vertical axis

5. The prismatic collimating device according to any of claims 1-4, wherein an exit pupil of the prismatic collimating device has common coordinates in only one of a horizontal axis and a vertical axis.

6. The prismatic collimating device according to any preceding claim, wherein the air gap size is less than 1 mm.

7. The prismatic collimating device according to any preceding claim, wherein the second surface and the fourth surface have a substantially similar surface form.

8. The prismatic collimating device according to any preceding claim, wherein at least one of the first surface, second surface and third surface have a substantially similar surface form to at least one of the fourth surface, fifth surface and sixth surface.

9. The prismatic collimating device according to any preceding claim, wherein at least one of the first surface, second surface, fourth surface, and sixth surface is coated with an anti-reflection coating.

10. The prismatic collimating device according to any preceding claim, wherein the first prism and the second prism further comprise alignment features.

11. The prismatic collimating device according to any preceding claim, wherein at least one of the first surface, second surface, third surface, fourth surface, fifth surface and sixth surface having a surface form substantially defined by at least one of: a spherical surface definition, an aspheric surface definition, a biconical surface definition, or a high order polynomial definition.

12. The prismatic collimating device according to any preceding claim, wherein the second surface is configured to reflect light received from a first range of angles, and transmit light received from a second range of angles, wherein the first range of angles and the second range of angles have substantially zero overlap.

13. The prismatic collimating device according to any preceding claim, wherein the fourth surface is configured to reflect light received from a third range of angles, and transmit light received from a fourth range of angles, wherein the third range of angles and the fourth range of angles have substantially zero overlap.

14. A prismatic collimating device to collimate image bearing light, the prismatic collimating device comprising:
a first prism and a second prism arranged to receive and collimate a light beam, wherein the first prism comprises an output surface adjacent to an input surface of the second prism, and the first prism and second prism are arranged such that the light beam undergoes total internal reflection and refraction at both the output surface of the first prism and the input surface of the second prism, and each of the first prism and second prism comprising at least three optically powered surfaces.

15. The prismatic collimating device according to claim 14, wherein the prismatic collimating device comprises at least one of claims 1 to 13.
